# EUROPEAN PATENT APPLICATION

(11) **EP 1 598 731 A1**
(43) Date of publication of application: **23.11.2005**
(21) Application number: 04425368.0
(22) Date of filing: 20.05.2004
(51) Int. Cl.: G06F 1/18

(54) **System for housing and positioning the motherboard and data memory, reading and recording units in a personal computer cabinet**

(71) Applicant: Petrarca, Antonio, 84036 Sala Consilina (SA) (IT)
(72) Inventor: Petrarca, Antonio, 84036 Sala Consilina (SA) (IT)

(57) **Abstract**

System for positioning the internal units in a personal computer cabinet characterized by the fact that the removable motherboard is secured to a support device constituted by one the metallic support plate (21) provided with holes (22) for the screws for holding the motherboard in place, which can be locked in to the desired position at an angle between 30º and 75º in the two directions with respect to the support surface and the walls of the cabinet, and hinged along its lower short edge to rectangular frame (23); while the data memory, reading and recording units, floppy disk, hard disk, CD-Rom, DVD or other similar peripherals are supported by a sliding device, constituted by a horizontal support surface (5) and vertical walls (6), (7), (8), (9), (11), (13) and (14), each equipped with the necessary holes (10), which is able to run in an axial sense towards the front of the cabinet once the cabinet's protective front cover has been removed.

## Description

### Technical field

Object of the present invention concerns the system for housing and positioning the motherboard and data memory, reading and recording units (hardisk, floppydisk, DVD, CD-ROM, etc.) for a cabinet of personal computer.

State of the technique

To the actual state of the technique, the motherboard is fixed within the cabinets for personal computer in a horizontal or vertical position in comparison to the plan of support or to the walls of the same cabinet.

These positions of the motherboard contribute to also determine the external encumbrances of the cabinet and don't allow an inside optimal exploitation of those .

Besides the various unities, floppydisk, hardisk, CD-ROM, DVD, and others are generally positioned in the frontal part of the cabinet in horizontal and fixed position, that doesn't facilitate their inspection in case of breakdown of the computer, neither their assemblage and dismantlement.

### Purposes and advantages of the invention

It is purpose of the invention to realize a system for housing and positioning the motherboard and data memory, reading and recording units in a personal computer cabinet, that realize to reduce the external dimensions of the cabinet, making better use of the internal cabinet volume and facilitating inspection operations for maintenance purposes, as well as for component assembly .

Other purpose of the present invention in accord with the preceding purpose is that to realize a hinged device that realizes a desired tilted position of the motherboard in comparison to the walls of the cabinet.

Other purpose of the present invention in accord with the preceding purposes and that to realize a sliding device that supports the unities floppydisk, hardisk, CD-ROM, DVD, or others peripheral.

Description of the drawings and way of realizing the invention.

Further characteristics and advantages of the invention will mostly result from the description of forms of execution preferred and illustrated to indicative and not limitative purpose from the attached drawings.

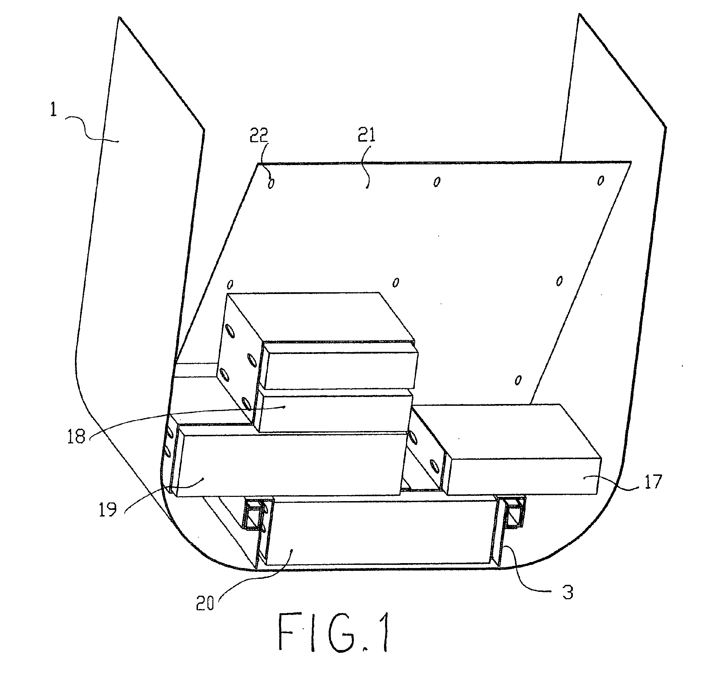

The fig. 1 shows, in a schematic three-dimensional sight, the cabinet open with the sliding device and the various housings of the data memory, reading and recording units and the position of the motherboard.

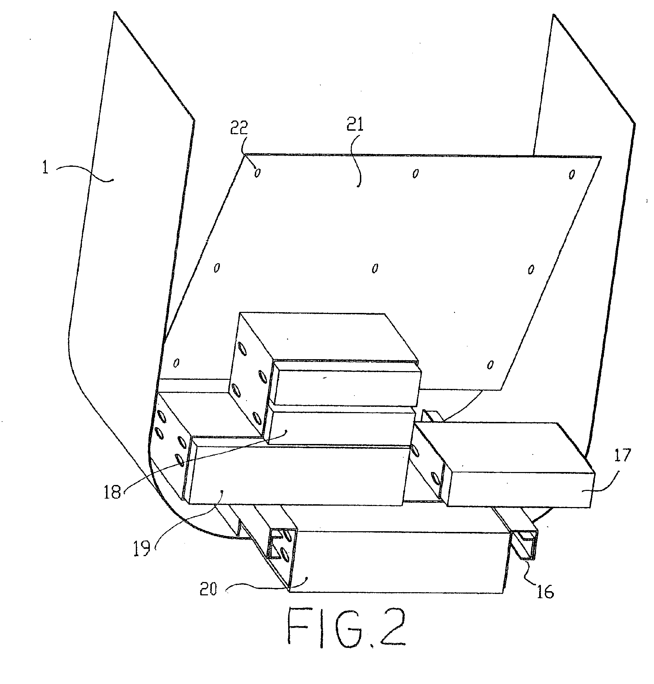

The fig. 2 shows, in a schematic three-dimensional sight, the sliding device in advanced position.

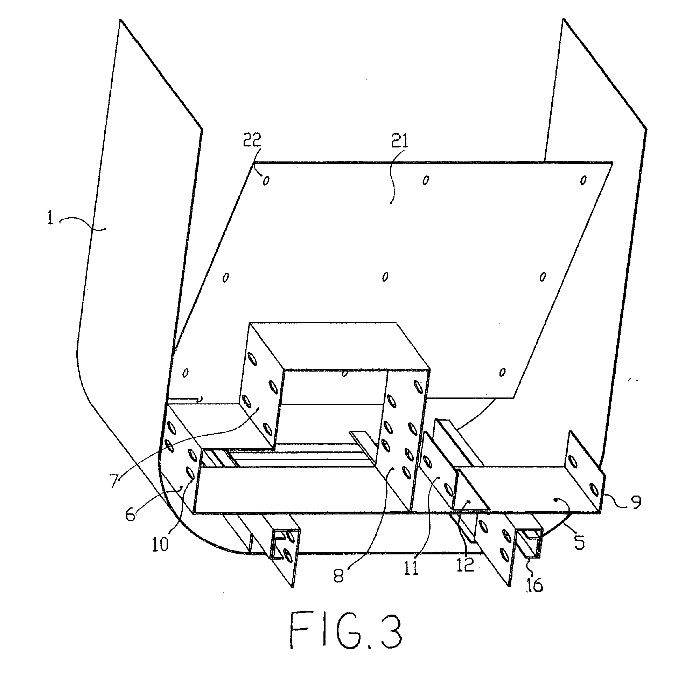

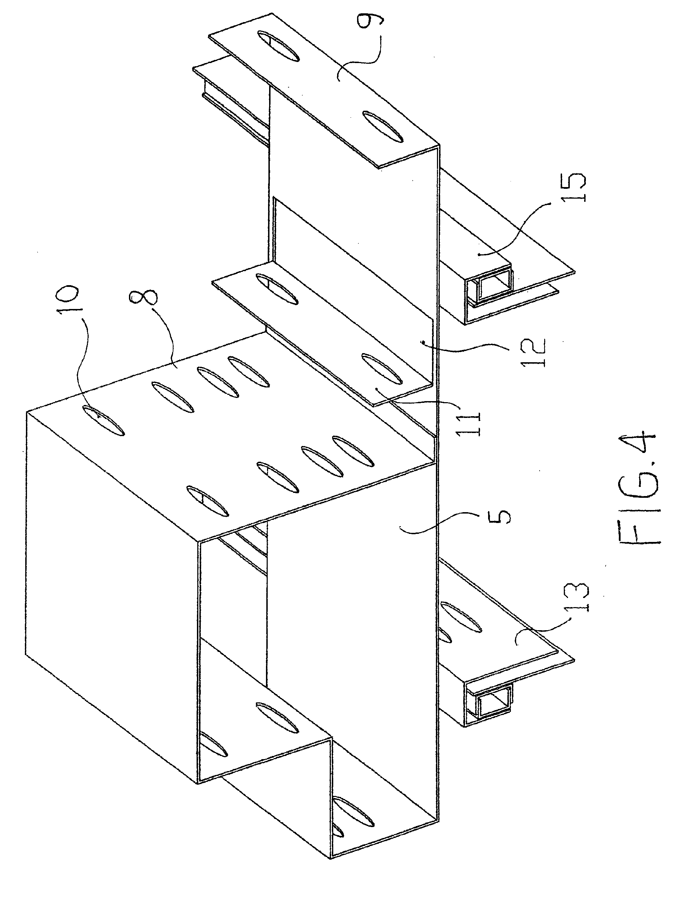

The fig. 3 shows, in a schematic three-dimensional sight, the sliding device in advanced position, deprived of the various unities installed on it. The fig. 4 shows in a three-dimensional sight only the sliding device .

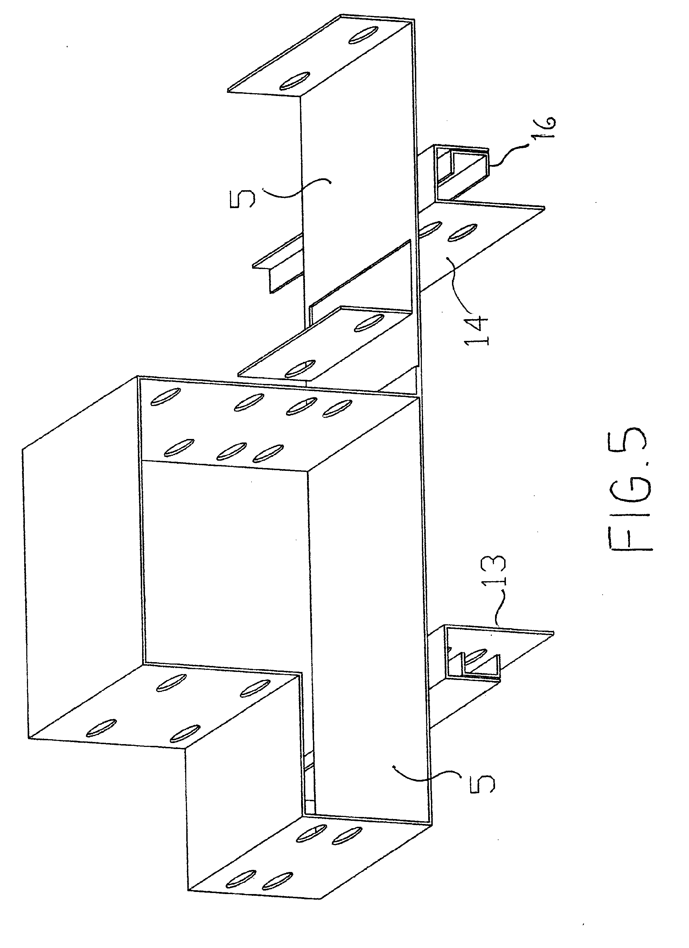

The fig. 5 shows, a further perspective of the sliding device .

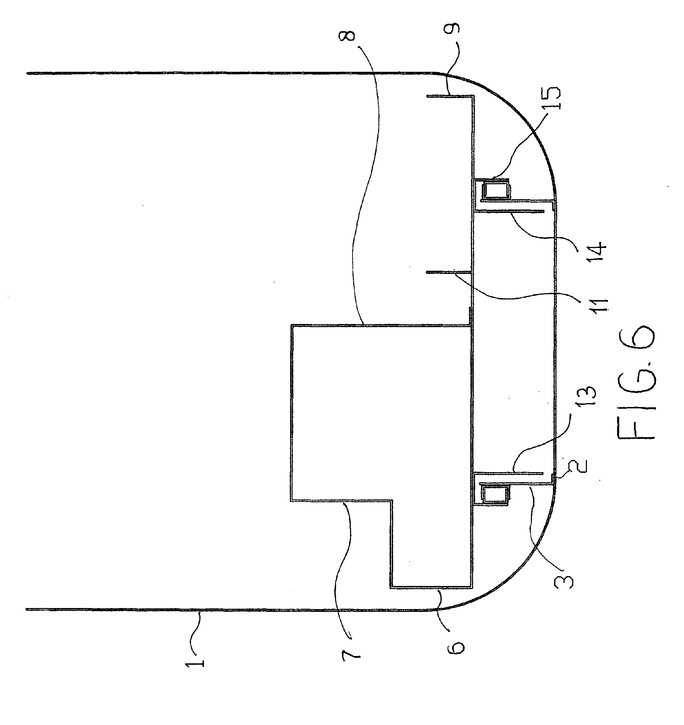

The fig. 6 shows, in a sight in section, the sliding device.

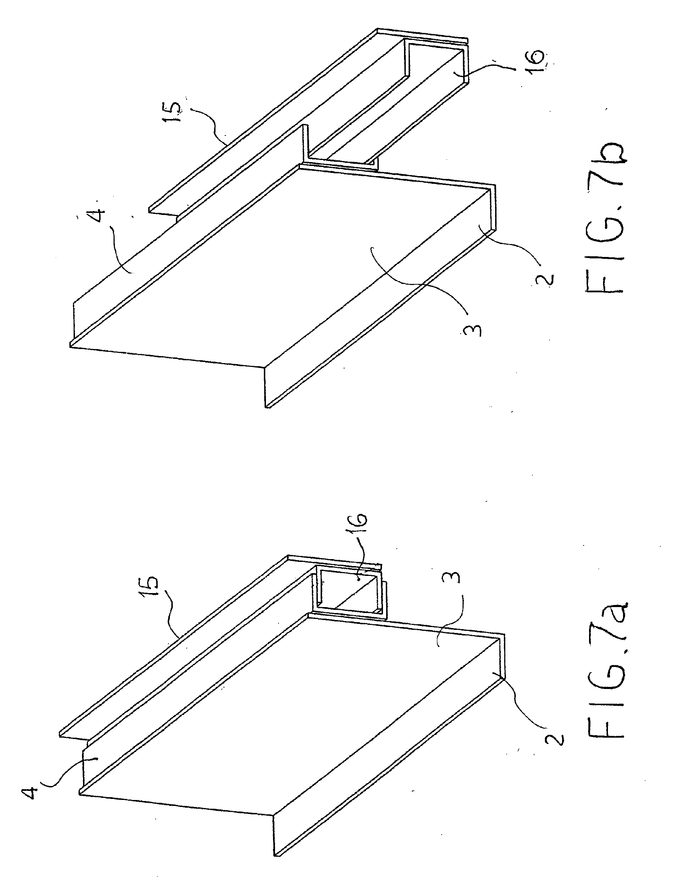

The fig. 7a and 7b show particular of the sliding device .

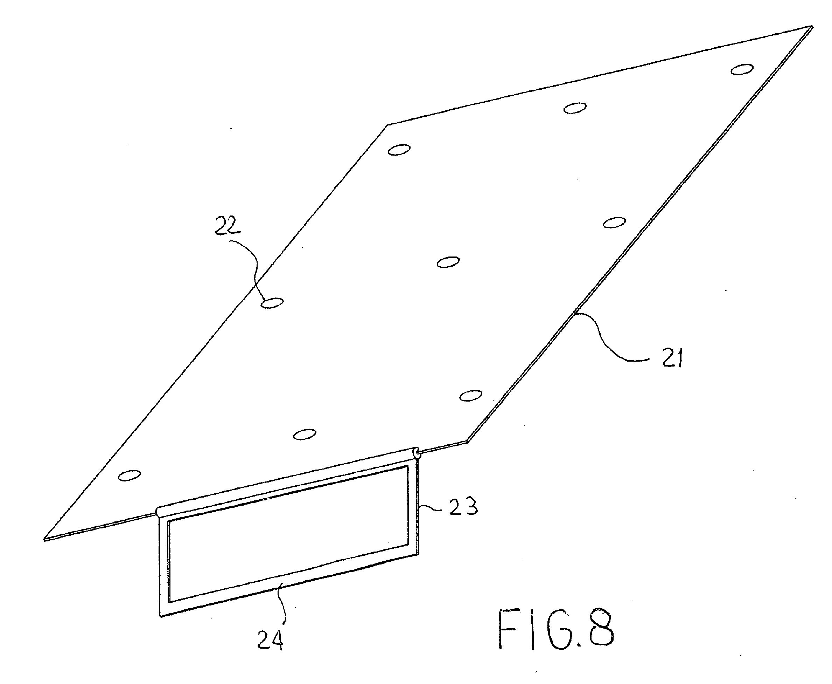

The fig. 8 shows, in a schematic three-dimensional sight, the motherboard support .

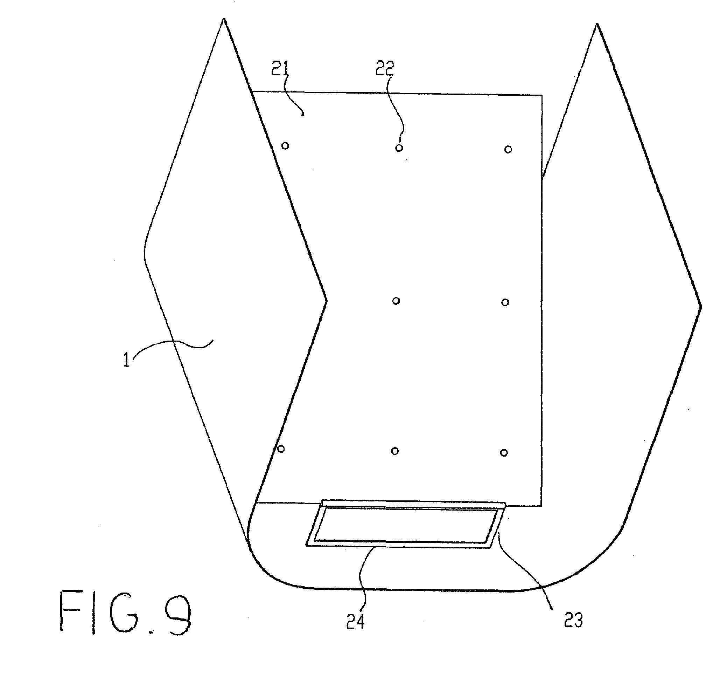

The fig. 9 show, in a sight three-dimensional back side schematic, the positioning within the cabinet open of the motherboard support.

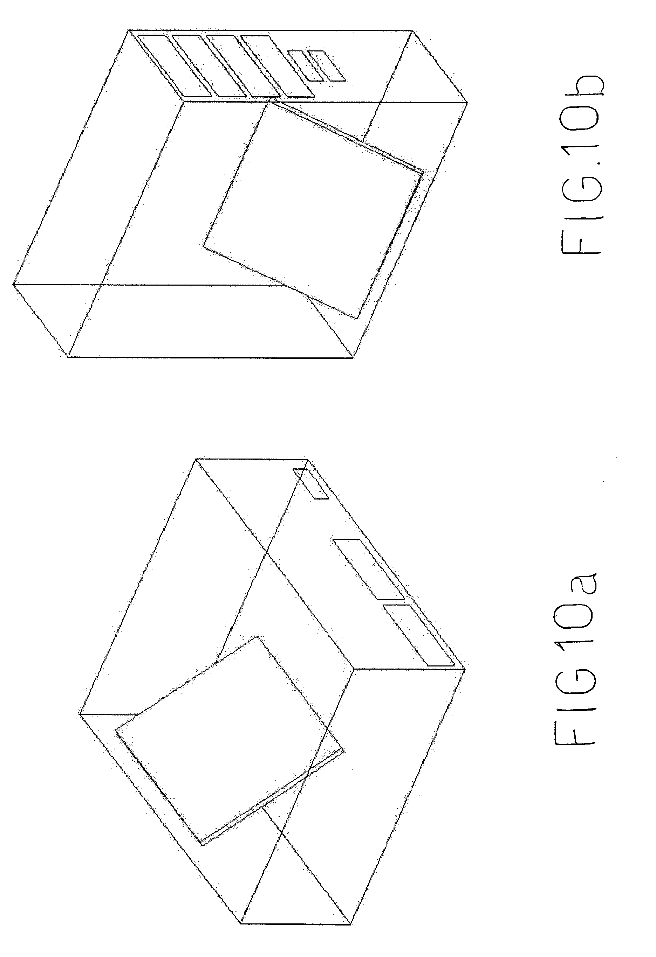

The fig.10 a) and b) schematically show some, among the so many possible, positionings of the motherboard in tilted position.

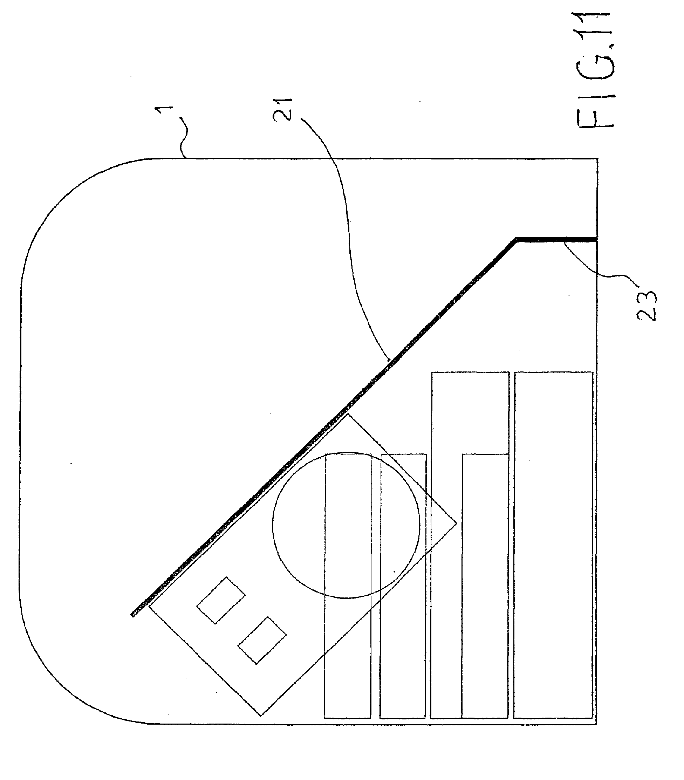

The fig. 11 shows schematically the motherboard support tilted toward it before to overlap to the various peripheral unities and the evident recovery of the space within the cabinet.

With reference to the attached figures, according to a preferred form of realization, with (1) is pointed out the metallic walls of the cabinet to which have fixed, along their edge (2), with riveting, glue, welding or also with screw connection, every of the rectangular metallic plates, left and right (3), positioned parallel to the lower surface and along the depth of the cabinet (1). To every of these metallic plates (3), along the other free greater side, they have fixed of the C-shaped section (4) that act as support and sliding guide for the metallic structure that leans on it.

The aforementioned structure consists of a rectangular metal plate that forms a horizontal support surface (5) and, through bending, vertical walls (6), (7), (8) and (9) too, each equipped with the necessary holes (10). The vertical wall (11), according to a preferred form, is formed from the same metal sheet as the surface (5), by forming the holes first, then cutting a rectangular eyelet (12) and lifting the cut metal sheet perpendicularly by 90º. The other vertical walls (13) and (14), which also have holes (10), are made from an irregular C-shaped section (15), which is riveted or fixed by other well known means, to the lower face of the aforementioned surface (5).

Another C-shaped section (16) is attached to the smaller fin of the section (15) and serves the purpose of entering and securing the housing (4) thereby creating a sliding axial connection towards the outside of the cabinet once it has been opened.

The various data memory, reading and recording units, floppy disks (17), hard disk (18), CD-Rom, DVD or other similar peripherals (19) and (20) in use in the commerce, are positioned and secured in a removable way, to the vertical walls by means of a widely marketed fixture system.

It is possible to increase or reduce the compartment volumes by increasing or reducing the vertical wall surfaces so that to contain more accessories, or to modify the disposition of installation of the accessories, by modifying the positions of the vertical walls on the surface (5).

In a position and preferred form, subsequently to the sliding support, the hinged support of the motherboard is realized.

It is constituted by one the metallic support plate (21), provided with holes (22) for the screws for holding the motherboard in place, which can be locked into the desired tilted position by means of a simple catch and which is hinged along its lower short edge to a rectangular frame (23), formed by shearing and lifting the metal sheet of the cabinet (1).

The realization of the wall (11) and of the rectangular frame (23) using the same plate of the cabinet and the creation of eyelets on the cutted surfaces realizes a saving of material as well as a best inside airing to the cabinet.

In another form of possible realization, the aforesaid rectangular frame (23) can be made separately and then secured, by well known means such as riveting, glue, etc. by the short side (24) of the frame (23) to the surface of the cabinet (1).

The support plate of the motherboard, as well as the motherboard itself, are positioned tilted in comparison to the walls of the cabinet, of an angle of any inclination, that is not of 0°, 90°, 180°, therefore such that the motherboard doesn't lie in vertical or horizontal position in comparison to the walls of the cabinet e/o to the support surface, as it currently happens in the cabinets in use. A simple additional device of block, among those known, it allows to hold the motherboard to the desired inclination, that in the practices realizations from us experiment various at an angle between 30º and 75º in the two directions.

The tilted position of the motherboard and its possibility to be tilted in the desired position, reduce the external dimensions of the cabinet, making better use of the internal cabinet volume and besides favoring the internal ventilation of a cabinet from the usual forms. This solution allows besides facilitating inspection operations for maintenance purposes, as well as for component assembly without being hampered by cables or installed peripherals, since they can be positioned beneath the motherboard.

Naturally the tilted position , pivoted or not, of the motherboard may be placed in an adjustable or fixed tilted position anywhere inside the cabinet, using different support elements, such as slide guides, on opposite walls of the cabinet, where the motherboard can be inserted from above once the cover has been opened; alternatively the motherboard can be placed in a tilted position by means of catches or other holding systems, placed on the base or on the vertical surfaces of the cabinet. From how much previously described and illustrated it can be seen that the invention reaches the preceded purposes.

## Claims

1. System for housing and positioning the internal units in a personal computer cabinet **characterized by** the fact that the removable motherboard is secured to a support device that tilts the motherboard itself in the desired position at an angle between 30º and 75º in the two directions with respect to the support surface and the walls of the cabinet, while the data memory, reading and recording units, floppy disk, hard disk, CD-Rom, DVD or other similar peripherals are supported by a sliding device, which is able to run in an axial sense towards the front of the cabinet once the cabinet's protective front cover has been removed.

2. System for housing and positioning the internal units in a personal computer cabinet as in claim 1) **characterized by** the fact that the motherboard support device consists of a metal support plate (21), provided with holes (22) for the screws for holding the motherboard in place, which can be locked into the desired tilted position by means of a simple catch and which is hinged along its lower short edge to a rectangular frame (23), formed by shearing and lifting the metal sheet of the cabinet (1).

3. System for housing and positioning the internal units in a personal computer cabinet as claims 1) and 2) **characterized by** the fact that the rectangular frame (23) can be made separately and then secured, by well known meafis such as riveting, glue, etc. by the short side (24) of the frame (23) to the surface of the cabinet (1).

4. System for housing and positioning the internal units in a personal computer cabinet as claim 1) **characterized by** the fact that the motherboard may be placed in an adjustable or fixed tilted position anywhere inside the cabinet, using different support elements, such as slide guides, on opposite walls of the cabinet, where the motherboard can be inserted from above once the cover has been opened; alternatively the motherboard can be placed in a tilted position by means of catches or other holding systems, placed on the base or on the vertical surfaces of the cabinet.

5. System for housing and positioning the internal units in a personal computer cabinet as claim 1) **characterized by** the fact that the sliding device that supports the data memory, reading and recording units, consists of a rectangular metal plate that forms a horizontal support surface (5) and, through bending, vertical walls (6), (7), (8) and (9) too, each equipped with the necessary holes (10); the vertical wall (11) is formed from the same metal sheet as the surface (5), by forming the holes first, then cutting a rectangular eyelet (12) and lifting the cut metal sheet perpendicularly by 90º; the other vertical walls (13) and (14), which also have holes (10), are made from an irregular C-shaped section (15), which is riveted or fixed by other well known means, to the lower face of the aforementioned surface (5).

6. System for housing and positioning the internal units in a personal computer cabinet as claims 1) e 5) **characterized by** the fact that another C-shaped section (16) is attached to the smaller fin of the section (15) and serves the purpose of entering and securing the housing (4) positioned on the plates (3) that are attached to the lower surface of the cabinet, thereby creating a sliding axial connection towards the outside of the cabinet once it has been opened.

7. System for housing and positioning the internal units in a personal computer cabinet as claims 1), 5) e 6) **characterized by** the fact that the various data memory, reading and recording units, floppy disks (17), hard disk (18), CD-Rom, DVD or other similar peripherals are positioned and secured in a removable fashion to the vertical walls (6), (7), (8), (9), (11), (13) and (14), by means of a widely marketed fixture system.

8. System for housing and positioning the internal units in a personal computer cabinet as claim 1) **characterized by** the fact that it is possible to increase or reduce the compartment volumes by increasing or reducing the vertical wall surfaces (6), (7), (8), (9), (11), (13) and (14), or by modifying the positions of the vertical walls on the surface (5), by bending the rectangular metal plate in different places.
